# EUROPÄISCHE PATENTSCHRIFT

(11) **EP 2 135 770 B1**
(45) Veröffentlichungstag und Bekanntmachung des Hinweises auf die Patenterteilung: **27.11.2013**
(21) Anmeldenummer: 09005134.3
(22) Anmeldetag: 08.04.2009
(51) Int. Cl.: B60N 2/16

(54) **Sitzsystem für ein Fahrzeug, insbesondere ein Kampffahrzeug**
Seat system for a vehicle, in particular a war vehicle
Système de siège pour un véhicule, en particulier un véhicule de combat

(30) Priorität: 17.06.2008 DE 102008028872
(43) Veröffentlichungstag der Anmeldung: 23.12.2009
(73) Patentinhaber: Krauss-Maffei Wegmann GmbH & Co. KG, 80997 München (DE)
(72) Erfinder: Sprafke, Uwe, 34270 Schauenburg (DE); Frost, Walter, 34289 Zierenberg (DE)
(74) Vertreter: Feder Walter Ebert

(56) Entgegenhaltungen:
- WO-A1-2007/031216
- DE-A1-102004 042 016
- DE-B3- 10 341 483
- US-A- 3 868 143
- US-A1- 2003 051 598

## Beschreibung

Die Erfindung betrifft ein Sitzsystem für ein Fahrzeug, insbesondere ein Kampffahrzeug, mit einem Sitz, der eine Sitzfläche und eine Rückenlehne umfasst, und einer Gurtaufhängung. Die Gurtaufhängung umfasst einen Gurt, an welchem der Sitz insbesondere am Dach des Fahrzeugs aufhängbar ist. Eine solche Entkopplung des Sitzes vom Boden wird insbesondere in militärischen Fahrzeugen verwendet, um die auf dem Sitz befindliche Person vor den Einwirkungen einer Mine zu schützen.

Ein an Gurten aufgehängter Sitz in einem Kampffahrzeug wird beispielsweise in der DE 10 2004 027 768 B4 oder WO-A-2007/031216 beschrieben. Um einen solchen Sitz räumlich stabil einzusetzen, bedarf es mehrerer Gurtstränge, um insbesondere eine seitliche Verzurrung zu erreichen. Die vielen benötigten Gurte werden in der Regel mit einer textilen Sitzfläche, die mit dem Nutzer verbunden ist, zu einem Sitz verbunden.

Bekannte Gurtsitze weisen somit keine feste Rückenlehne und keine feste Sitzfläche auf, so dass ein Sitzen in komfortabler und ergonomisch günstiger Weise nicht möglich ist. Ferner müssen bei bekannten Gurtsitzen die Personen mit mehreren Sicherheitsgurten abgesichert werden, so dass die Bewegungsfreiheit in negativer Weise eingeschränkt ist.

Bei Fahrzeugsitzen ist es vorteilhaft, wenn diese in der Höhe, d.h. in einer vertikalen Ebene, verstellbar sind. Bei Sitzen in Kampffahrzeugen sollten insbesondere die Sitze, die unterhalb einer Ein- /Ausstiegsluke angeordnet sind, zudem derart höhenverstellbar sein, dass eine Person auch "über Luke" fahren kann, d.h. dass diese bei geöffneter Luke zumindest mit dem Kopf außerhalb des Fahrzeuges sitzt und somit die Fahrzeugumgebung beobachten kann. Verschiedene Möglichkeiten einer Höhenverstellung eines mittels einer Rohrkonstruktion an der Vorder- oder Seitenwand und/oder der Dachplatte einer Fahrzeugwanne eines militärischen Fahrzeugs aufgehängten Sitzes werden beispielsweise in der DE 101 45 315 A1 beschrieben, wobei die Antriebsvorrichtung zum Anheben des Sitzes beispielsweise als Spindeltrieb, als Seilzug oder Kettentrieb, als Druck- oder Zugfeder oder als Gasfeder ausgestaltet ist.

Um Personen verschiedener Größe das Sitzen auf dem Sitzsystem in ergonomisch komfortabler Weise zu ermöglichen, sollte der Sitz eine Einrichtung zum Perzentilausgleich aufweisen. Diese kann derart ausgestaltet sein, dass die Rückenlehne zweiteilig ausgestaltet ist, wobei die beiden Rückenlehnenelemente zueinander verschiebbar angeordnet sein können. Ein solcher Sitz für ein Fahrzeug wird beispielsweise in der DE 10 2004 035 145 A1 beschrieben.

Es ist die Aufgabe der Erfindung, ein Sitzsystem bereitzustellen, bei welchem der Sitz mittels einer Gurtaufhängung aufhängbar ist und welches in einfacher Weise derart ausgestaltet ist, dass der Sitz angehoben werden kann.

Die Erfindung löst die Aufgabe mit den Merkmalen aus dem kennzeichnenden Teil des Patentanspruchs 1. Vorteilhafte Weiterbildungen sind Bestandteil der abhängigen Ansprüche.

Ein Grundgedanke der Erfindung liegt darin, dass der Gurt zum Anheben des Sitzes, der eine feste Rückenlehne und eine feste Sitzfläche umfasst, mittels einer Aufrollvorrichtung aufrollbar ist. Die Aufrollvorrichtung kann beispielsweise nach Art eines Automatikgurtes ausgestaltet sein. Bevorzugt weist die Aufrollvorrichtung eine Feder, insbesondere eine Spiralfeder, auf, die das Anheben des Sitzes bewirkt. Die Federkraft der Feder kann derart dimensioniert sein, dass sich bei einer Belastung des Sitzes mit einem Gewicht von mehr als 50 kg der Sitz absenkt. Dieses Gewicht ist derart gewählt, dass die Belastung einer Person ausreicht, um den Sitz abzusenken. Die Aufrollvorrichtung kann zudem ein Sperrelement aufweisen, welches eine Aufrollbewegung blockiert und den Sitz auf einer Höhe festhält. Das insbesondere federbelastete Sperrelement kann vom Bediener mittels einer Betätigungsvorrichtung, beispielsweise ein Bowdenzug, gelöst werden und somit die Höhenverstellung freigeben.

Um einen Perzentilausgleich zu ermöglichen, kann die Rückenlehne des Sitzes aus einem oberen und einem unteren Rückenlehnenelement zusammengesetzt sein, wobei die beiden Rückenlehnenelemente zueinander verschiebbar angeordnet sein können. Bevorzugt ist an dem oberen Rückenlehnenelement ein Zusatzgurt der Gurtaufhängung angeordnet. In einer besonders vorteilhaften Ausgestaltung ist dieser Zusatzgurt ebenfalls mittels einer Aufrollvorrichtung aufrollbar, wobei bevorzugt der Zusatzgurt getrennt von dem Gurt zum Anheben des Sitzes aufrollbar ist. Durch diese Ausgestaltung kann die Höhenverschiebung und somit der Perzentilausgleich des oberen Rückenlehnenelementes mittels der Aufrollvorrichtung bewirkt werden.

Um Pendelbewegungen des Sitzes zu vermeiden, kann das Sitzsystem eine fest am Fahrzeug anordbare Führungsvorrichtung umfassen, wobei am Sitz Führungselemente angeordnet sein können, die von der Führungsvorrichtung geführt werden. Bevorzugt sind die Führungselement seitlich am Sitz angeordnet, insbesondere an der Rückenlehne und/oder der Sitzfläche. Mittels der Führungsvorrichtung kann der Sitz in einer vertikalen Ebene führbar sein. Wenn die Führungsvorrichtung eine Kurvenführung aufweist, kann der Sitz zudem zusätzlich in einer horizontalen Ebene verschiebbar sein. Bei einer besonders bevorzugten Ausgestaltung umfasst die Führungsvorrichtung zwei Führungsschienen, die beidseitig des Sitzes angeordnet sein können. Die Führungsvorrichtung kann zudem ein Feststellelement umfassen, mit welchem der Sitz in einer Höhe festgestellt werden kann.

Die Erfindung umfasst zudem ein Fahrzeug mit einem bereits beschriebenen Sitzsystem, wobei bevorzugt die Aufrollvorrichtung am Fahrzeugdach angeordnet sein kann. Die Aufrollvorrichtung kann jedoch bei gleicher Wirkung auch am Sitz angeordnet sein, wobei dann das freie Ende des Gurtes am Fahrzeug, insbesondere am Dach, befestigt ist. Insbesondere im Falle eines militärischen Fahrzeugs kann das Sitzsystem unter einer Ein-/Ausstiegsluke des Fahrzeugs angeordnet sein. Zudem kann auch die Führungsvorrichtung des Sitzsystems am Fahrzeugdach angeordnet sein. Bevorzugt weist das Fahrzeug zum Minenschutz einen Zwischenboden auf, wobei die Führungsvorrichtung zwischen dem Fahrzeugdach und dem Zwischenboden angeordnet sein kann.

Der Sitz kann zudem ein Rückhaltegurtsystem aufweisen, um die Sicherheit der Personen zu erhöhen.

Um den Sitz anzuheben, kann die Gurtaufhängung für einen Moment entlastet werden, so dass sich der Sitz anhebt. Zur Erleichterung kann ein Handgriff im Bereich des Daches angeordnet sein, an dem sich die Person hochziehen kann. Durch die Sperr- und/oder Feststellelemente kann der Sitz in der Höhe arretiert werden. Der Sitz kann durch Lösen der Sperr- und/oder Feststellelemente und durch Belasten des Sitzes wieder abgesenkt werden.

Ein mögliches Ausführungsbeispiel der Erfindung wird anhand der Fig. 1 bis 4 beschrieben. Es zeigen
- Fig. 1: ein Sitzsystem in der abgesenkten Stellung in einer perspektivischen Darstellung,
- Fig. 2: ein Sitzsystem nach Fig. 1 aus einem anderen Blickwinkel,
- Fig. 3: das Sitzsystem nach Fig. 1 in einer angehobenen Stellung und
- Fig. 4: das Sitzsystem nach Fig. 3 aus einem anderen Blickwinkel.

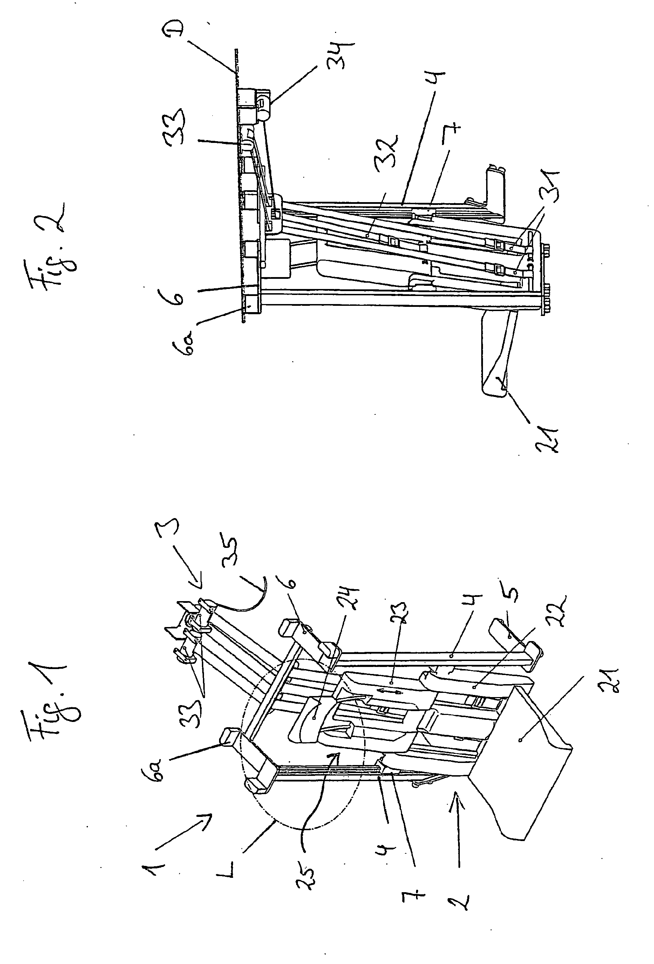

Die Fig. 1 bis 4 zeigen ein Sitzsystem, welches unterhalb einer Ein-/Ausstiegsluke L eines nicht detailliert dargestellten Fahrzeuges mit einem Fahrzeugdach D angeordnet ist. Das Sitzsystem 1 weist einen Sitz 2 und eine Gurtaufhängung 3 auf. Der Sitz 2 umfasst eine klappbare, gepolsterte Sitzfläche 21, welche an einer gepolsterten Rückenlehne 25 angeordnet ist. Die Rückenlehne 25 umfasst ein unteres Rückenlehnenelement 22 und ein verschiebbar dazu angeordnetes Rückenlehnenelement 23, an welchem wiederum eine individuell einstellbare Kopfstütze 24 angeordnet ist. Es ergibt sich somit ein Sitz 2, welcher ein komfortables und ergonomisch günstiges Sitzes erlaubt.

Der Sitz 2 ist mittels einer Gurtaufhängung 3 am Fahrzeugdach D aufgehängt. Die Gurtaufhängung 3 umfasst zwei Gurte 31, die mit dem unteren Rückenlehnenelement 22 verbunden sind. An dem anderen Ende der Gurte 31 ist jeweils eine Aufrollvorrichtung 33 am Fahrzeugdach D angeordnet, mittels derer die Gurte 31 aufrollbar sind, so dass der Sitz 2 angehoben werden kann. Das obere Rückenlehnenelement 23 ist mit einem Gurt 32 verbunden, der über eine am Dach angeordnete Aufrollvorrichtung 34 ebenfalls aufrollbar ist, so dass ein Perzentilausgleich möglich ist. Die Aufrollvorrichtungen 33 und 34 sind im Detail nicht weiter dargestellt. Sie beinhalten eine Feder, die das Anheben des Sitzes 2 bewirkt. Die Federkraft der Feder ist derart dimensioniert, dass sich bei einer Belastung des Sitzes mit einem Gewicht von mehr als 50 kg der Sitz absenkt. Zudem weisen die Aufrollvorrichtungen 33 und 34 jeweils ein Sperrelement auf, welches eine Bewegung des Sitzes 2 verhindert. Das Sperrelement kann über einen in Fig. 1 skizzierten Bowdenzug 35 gelöst werden.

Um eine Seitenstabilisierung des Sitzes 2 zu erreichen, ist eine schienenartige Führungsvorrichtung 4 vorgesehen, welche mit den Befestigungselementen 6 über Befestigungswinkel 6a am Fahrzeugdach D befestigt ist. Im unteren Bereich ist die Führungsvorrichtung 4 in nicht dargestellter Weise an einem Zwischenboden, der von dem Fahrzeugboden aus Minenschutzgründen entkoppelt ist, über die Befestigungsvorrichtungen 5 befestigt. Beidseitig des Sitzes 2 sind Führungselemente 7 an der festen Rückenlehne 25 angeordnet, die durch die Führungsvorrichtung 4 in der vertikalen Ebene geführt werden. Somit können Pendelbewegungen in einer horizontalen Richtung vermieden werden. Da Pendelbewegungen vermieden werden, kann der Sitz 2 auch als Kommandantensitz Einsatz finden, wobei der Kommandant in stabiler Lage Periskope oder andere Sichteinrichtungen verwenden kann. Hierbei sind keine platzaufwändigen Querverspannungen von stabilisierenden Gurten, wie bei Gurtsitzsystemen bekannt, erforderlich.

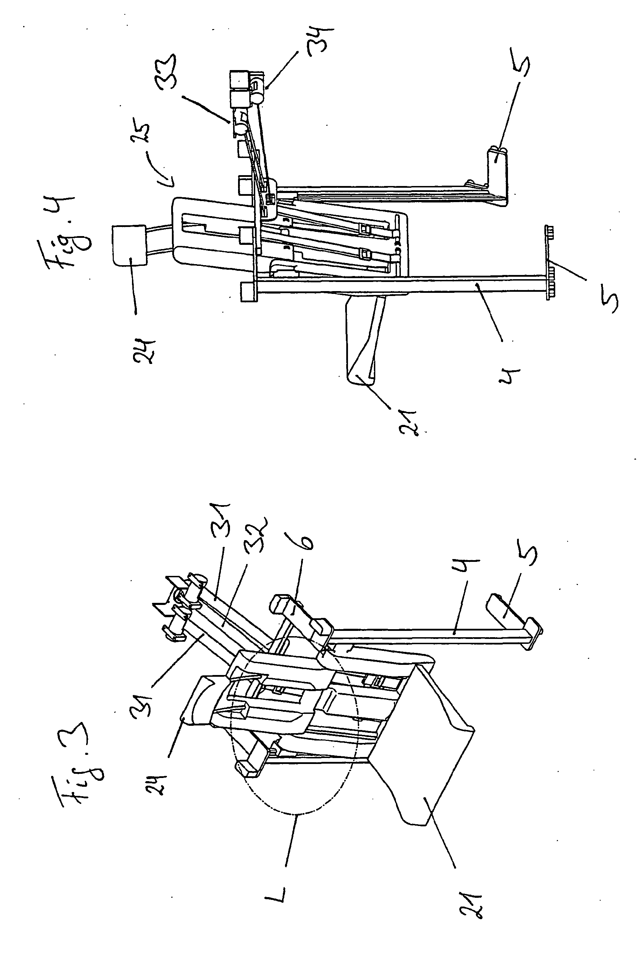

Der Sitz 2 kann aus der in Fig. 1 und Fig. 2 dargestellten abgesenkten Stellung in die in den Fig. 3 und 4 dargestellte angehobene Stellung überführt werden. In der angehobenen Stellung durchtritt die Kopfstütze 24 die Ein-/Ausstiegsluke L, so dass ein Fahren "über Luke" möglich ist.

Der Sitz 2 kann über nicht dargestellte Sperrelemente in der Aufrollvorrichtung 33, 34 festgestellt werden. Zum Absenken des Sitzes 2 müssen zunächst die Sperrelemente gelöst und die Sitzfläche 21 langsam belastet werden, so dass ein Absenken des Sitzes gegen die Federkraft der Aufrollvorrichtungen 33 und 34 möglich ist. Zum Anheben des Sitzes 2 muss die Person zunächst wiederum die Sperrelemente lösen und die Sitzfläche 21 entlasten, so dass die Aufrollvorrichtungen 33 und 34 den Sitz 2 automatisch anheben können. Am Dach D des Fahrzeugs ist zudem ein nicht dargestellter Handgriff angeordnet, welchen die sitzende Person zum Hochziehen verwenden kann.

## Patentansprüche

1. Sitzsystem (1) für ein Fahrzeug, insbesondere ein Kampffahrzeug, mit einem Sitz (2) und einer Gurtaufhängung (3) mit einem Gurt (31, 32), an welchem der Sitz (2) insbesondere am Dach (D) des Fahrzeugs aufhängbar ist, und der zum Anheben des Sitzes (2) mittels einer Aufrollvorrichtung (33, 34) aufrollbar ist,
**dadurch gekennzeichnet,**
**dass** der Sitz eine feste Rückenlehne (25) und eine feste Sitzfläche (21) umfasst.

2. Sitzsystem (1) nach Anspruch 1, **dadurch gekennzeichnet, dass** die Aufrollvorrichtung (33, 34) eine Feder, insbesondere Spiralfeder, aufweist, die das Anheben des Sitzes (2) bewirkt.

3. Sitzsystem (1) nach Anspruch 2, **dadurch gekennzeichnet, dass** die Federkraft der Feder derart dimensioniert ist, dass sich bei einer Belastung des Sitzes (2) mit einem Gewicht von mehr als 50 kg der Sitz (2) absenkt.

4. Sitzsystem (1) nach einem der vorhergehenden Ansprüche, **dadurch gekennzeichnet, dass** ein Sperrelement, insbesondere in der Aufrollvorrichtung (33, 34), angeordnet ist, welches den Sitz (2) in einer Höhe feststellt.

5. Sitzsystem (1) nach einem der vorhergehenden Ansprüche, **dadurch gekennzeichnet, dass** die Rückenlehne (25) aus einem oberen Rückenlehnenelement (23) und einem unteren Rückenlehnenelement (22) zusammengesetzt ist, wobei die beiden Rückenlehnenelemente (23, 22) zueinander verschiebbar angeordnet sind.

6. Sitzsystem (1) nach Anspruch 5, **dadurch gekennzeichnet, dass** an dem oberen Rückenlehnenelement (23) ein, insbesondere mittels einer Aufrollvorrichtung (34) aufrollbarer, Zusatz-Gurt (32) angeordnet ist.

7. Sitzsystem (1) nach Anspruch 6, **dadurch gekennzeichnet, dass** der Zusatz-Gurt (32) getrennt von dem Gurt (31) zum Anheben des Sitzes (2) aufrollbar ist.

8. Sitzsystem (1) nach einem der vorhergehenden Ansprüche, **dadurch gekennzeichnet, dass** es eine fest am Fahrzeug anordbare Führungsvorrichtung (4) umfasst, wobei am Sitz (2) Führungselemente (2) angeordnet sind, die von der Führungsvorrichtung (4) geführt werden, wobei insbesondere die Führungselemente (7) seitlich am Sitz (2) angeordnet sind.

9. Sitzsystem (1) nach Anspruch 8, **dadurch gekennzeichnet, dass** der Sitz (2) mittels der Führungsvorrichtung (4) in einer vertikalen Ebene führbar ist.

10. Sitzsystem (1) nach Anspruch 8 oder 9, **dadurch gekennzeichnet, dass** die Führungsvorrichtung (4) eine Kurvenführung aufweist.

11. Sitzsystem (1) nach einem der Ansprüche 8 bis 10, **dadurch gekennzeichnet, dass** die Führungsvorrichtung zwei Führungsschienen (4) aufweist, die insbesondere beidseitig des Sitzes (2) angeordnet sind.

12. Sitzsystem (1) nach einem der Ansprüche 8 bis 11, **dadurch gekennzeichnet, dass** die Führungsvorrichtung (4) ein Feststellelement umfasst, mit welchem der Sitz (2) in einer Höhe feststellbar ist.

13. Fahrzeug mit einem Sitzsystem (1) nach einem der Ansprüche 1 bis 12, **dadurch gekennzeichnet, dass** die Aufrollvorrichtung (33, 34) am Fahrzeugdach (D) angeordnet ist, wobei insbesondere das Sitzsystem (1) unter einer Ein-/Ausstiegsluke (L) des Fahrzeugs angeordnet ist.

14. Fahrzeug nach Anspruch 13, **dadurch gekennzeichnet, dass** die Führungsvorrichtung des Sitzsystems (1) nach einem der Ansprüche 8 bis 12 am Fahrzeugdach (D) angeordnet ist.

15. Fahrzeug nach Anspruch 14, **dadurch gekennzeichnet, dass** das Fahrzeug einen Zwischenboden aufweist und dass die Führungsvorrichtung zwischen dem Fahrzeugdach (D) und dem Zwischenboden angeordnet ist.

## Claims

1. Seat system (1) for a vehicle, in particular a combat vehicle, with a seat (2) and with a belt suspension (3) with a belt (31, 32) from which the seat (2) can be suspended, in particular from the roof (D) of the vehicle, and which can be retracted by means of a retractor (33, 34) for the purpose of raising the seat (2),
**characterised in that**
the seat (2) includes a firm back-rest (25) and a firm seat surface (21).

2. Seat system (1) according to Claim 1, **characterised in that** the retractor (33, 34) exhibits a spring, in particular a helical spring, which brings about the raising of the seat (2).

3. Seat system (1) according to Claim 2, **characterised in that** the spring force of the spring is such that the seat (2) is lowered in the case of a loading of the seat (2) with a weight of more than 50 kg.

4. Seat system (1) according to one of the preceding claims, **characterised in that** an arresting element has been provided, in particular in the retractor (33, 34), which locks the seat (2) at a height.

5. Seat system (1) according to one of the preceding claims, **characterised in that** the back-rest (25) is composed of an upper back-rest element (23) and a lower back-rest element (22), the two back-rest elements (23, 22) having been arranged so as to be displaceable in relation to one another.

6. Seat system (1) according to Claim 5, **characterised in that** on the upper back-rest element (23) an auxiliary belt (32) has been arranged which, in particular, can be retracted by means of a retractor (34).

7. Seat system (1) according to Claim 6, **characterised in that** the auxiliary belt (32) can be retracted separately from the belt (31) for raising the seat (2).

8. Seat system (1) according to one of the preceding claims, **characterised in that** it includes a guide device (4) which is capable of being firmly arranged on the vehicle, whereby guide elements (7) which are guided by the guide device (4) have been arranged on the seat (2), whereby, in particular, the guide elements (7) have been arranged laterally on the seat (2).

9. Seat system (1) according to Claim 8, **characterised in that** the seat (2) can be guided in a vertical plane by means of the guide device (4).

10. Seat system (1) according to Claim 8 or 9, **characterised in that** the guide device (4) exhibits a curved guide.

11. Seat system (1) according to one of Claims 8 to 10, **characterised in that** the guide device exhibits two guide rails (4) which, in particular, have been arranged on both sides of the seat (2).

12. Seat system (1) according to one of Claims 8 to 11, **characterised in that** the guide device (4) includes a locking element with which the seat (2) can be locked at a height.

13. Vehicle with a seat system (1) according to one of Claims 1 to 12, **characterised in that** the retractor (33, 34) has been arranged on the vehicle roof (D), whereby, in particular, the seat system (1) has been arranged beneath an entrance/exit hatch (L) of the vehicle.

14. Vehicle according to Claim 13, **characterised in that** the guide device of the seat system (1) according to one of Claims 8 to 12 has been arranged on the vehicle roof (D).

15. Vehicle according to Claim 14, **characterised in that** the vehicle exhibits an intermediate floor and **in that** the guide device has been arranged between the vehicle roof (D) and the intermediate floor.

## Revendications

1. Système de siège (1) pour un véhicule, en particulier un véhicule de combat, avec un siège (2) et un dispositif de suspension de sangle (3) présentant une sangle (31, 32), sur laquelle le siège (2) peut être suspendu, en particulier sur le toit (D) du véhicule, et qui peut être enroulée pour le levage du siège (2) à l'aide d'un dispositif d'enroulement (33, 34),
**caractérisé en ce que**
le siège comporte un dossier fixe (25) et une surface de siège fixe (21).

2. Système de siège (1) selon la revendication 1, **caractérisé en ce que** le dispositif d'enroulement (33, 34) présente un ressort, en particulier un ressort hélicoïdal qui provoque le levage du siège (2).

3. Système de siège (1) selon la revendication 2, **caractérisé en ce que** la force du ressort est telle que pour une charge du siège (2) avec un poids supérieur à 50 kg, le siège (2) s'abaisse.

4. Système de siège (1) selon l'une quelconque des revendications précédentes, **caractérisé en ce qu'**un élément de verrouillage est disposé notamment dans le dispositif d'enroulement (33, 34), lequel élément fixe une hauteur du siège (2).

5. Système de siège (1) selon l'une quelconque des revendications précédentes, **caractérisé en ce que** le dossier (25) est composé d'un élément de dossier supérieur (23) et d'un élément de dossier inférieur (22), les deux éléments de dossier (23, 22) étant disposés de manière mobile l'un par rapport à l'autre.

6. Système de siège (1) selon la revendication 5, **caractérisé en ce qu'**une sangle supplémentaire (32) enroulable notamment à l'aide d'un dispositif d'enroulement (34) est disposée sur l'élément de dossier (23) supérieur.

7. Système de siège (1) selon la revendication 6, **caractérisé en ce que** la sangle supplémentaire (32) est enroulable séparément de la ceinture (31) pour lever le siège (2).

8. Système de siège (1) selon l'une quelconque des revendications précédentes, **caractérisé en ce qu'**il comporte un dispositif de guidage (4) pouvant être disposé fixement sur le véhicule, des éléments de guidage (7) étant disposés sur le siège (2), lesquels sont guidés par le dispositif de guidage (4), en particulier les éléments de guidage (7) étant disposés latéralement sur le siège (2).

9. Système de siège (1) selon la revendication 8, **caractérisé en ce que** le siège (2) peut être guidé à l'aide du dispositif de guidage (4) dans un plan vertical.

10. Système de siège (1) selon la revendication 8 ou 9, **caractérisé en ce que** le dispositif de guidage (4) présente un guidage courbe.

11. Système de siège (1) selon l'une quelconque des revendications 8 à 10, **caractérisé en ce que** le dispositif de guidage présente deux rails de guidage (4) qui sont disposés notamment de part et d'autre du siège (2).

12. Système de siège (1) selon l'une quelconque des revendications 8 à 11, **caractérisé en ce que** le dispositif de guidage (4) comporte un élément de blocage, avec lequel une hauteur du siège (2) peut être bloquée.

13. Véhicule avec un système de siège (1) selon l'une quelconque des revendications 1 à 12, **caractérisé en ce que** le dispositif d'enroulement (33, 34) est disposé sur le toit du véhicule (D), notamment le système de siège (1) étant disposé sous une trappe d'accès (L) du véhicule.

14. Véhicule selon la revendication 13, **caractérisé en ce que** le dispositif de guidage du système d'assise (1) selon l'une quelconque des revendications 8 à 12 est disposé sur le toit du véhicule (D).

15. Véhicule selon la revendication 14, **caractérisé en ce que** le véhicule présente un fond intermédiaire et **en ce que** le dispositif de guidage est disposé entre le toit du véhicule (D) et le fond intermédiaire.
